# EUROPÄISCHE PATENTANMELDUNG

(11) **EP 4 679 126 A1**
(43) Veröffentlichungstag der Anmeldung: **14.01.2026**
(21) Anmeldenummer: 24187003.9
(22) Anmeldetag: 08.07.2024
(51) Int. Cl.: G01S 5/02, G08G 1/00, G08G 1/01, G08G 1/0967, H04W 4/029, H04W 4/40, H04W 64/00

(54) **STANDORTBESTIMMUNG**

(71) Anmelder: Schmitz Cargobull AG, 48341 Altenberge (DE)
(72) Erfinder: Weyring, Bernd, 48629 Metelen (DE); Buyting, Leander, 46397 Bocholt (DE); Kaup, Carsten, Coesfeld 48653 (DE); Queckenstedt, Birger, 46325 Borken (DE); Voth, Hendrik, 48734 Reken (DE)
(74) Vertreter: Cohausz & Florack

(57) **Zusammenfassung**

Es wird unter anderem ein Verfahren offenbart, wobei das Verfahren umfasst:
- Empfangen, durch eine drahtlosen Empfangsvorrichtung eines empfangenden Transportfahrzeugs, zumindest eines drahtlosen Kommunikationssignals von zumindest einem sendenden Transportfahrzeug;
- Bestimmen zumindest einer Signalstärke des zumindest einen empfangenen drahtlosen Kommunikationssignals;
- Bestimmen, zumindest teilweise basierend auf der zumindest einen bestimmten Signalstärke des zumindest einen empfangenen drahtlosen Kommunikationssignals, einer Standortindikation des empfangenden Transportfahrzeugs, wobei die Standortindikation indikativ für einen Standort des empfangenden Transportfahrzeugs ist,
- Übermitteln, mittels einer drahtlosen Sendevorrichtung des empfangenden Transportfahrzeugs, der Standortindikation an eine weitere Vorrichtung, wobei die weitere Vorrichtung von dem Transportfahrzeug getrennt ist.

## Beschreibung

### Gebiet

Die Erfindung betrifft Verfahren und Vorrichtungen zur Bestimmung eines Standorts eines Fahrzeugs, insbesondere eines Transportfahrzeuges, insbesondere eines Trailers.

### Hintergrund

Transportfahrzeuge werden zwischen Fahrten auf oft weitläufigen Arealen abgestellt. Ein Abstellen kann beispielsweise zum Be- und/oder Entladen, zur Zwischenlagerung oder Wartung vorgenommen werden. Beispielsweise werden Transportfahrzeuge auf einem sogenannten Trailer Yard abgestellt.

### Zusammenfassung einiger beispielhafter Ausführungsformen der Erfindung

Die Erfindung befasst sich unter anderem damit, den Standort eines Transportfahrzeugs zu bestimmen, insbesondere während eines Stillstands des Transportfahrzeugs, insbesondere mit einer möglichst hohen Präzision.

Es wurde erkannt, dass es für die logistische Handhabung von Transportfahrzeugen von hoher Relevanz ist, einen jeweiligen Standort eines Transportfahrzeugs zu kennen. Ferner wurde erkannt, dass eine Bestimmung eines Standorts per Navigationssatelliten- und Zeitgebungssystem (GNSS) (z.B. NAVSTAR GPS, GLONASS, Galileo) unter Umständen keine hinreichende Genauigkeit bereitstellen kann (beispielsweise nicht hinreichend, um einen Stellplatz von einem Nachbarstellplatz zu unterscheiden). Andererseits wurde erkannt, dass auf Arealen, auf denen Transportfahrzeuge abgestellt werden, teils keine Infrastruktur zur Standortbestimmung bereitgestellt wird.

Eine Aufgabe der vorliegenden Erfindung ist es daher, eine Standortbestimmung für Transportfahrzeuge bereitzustellen, welche eine hinreichende Genauigkeit aufweist und möglichst wenig Voraussetzungen an eine (z.B. fest installierte) Infrastruktur stellt.

Gemäß einem ersten Aspekt der Erfindung wird ein Verfahren offenbart, wobei das Verfahren umfasst:
- Empfangen, durch eine drahtlosen Empfangsvorrichtung eines empfangenden Transportfahrzeugs, zumindest eines drahtlosen Kommunikationssignals von zumindest einem sendenden Transportfahrzeug;
- Bestimmen zumindest einer Signalstärke des zumindest einen empfangenen drahtlosen Kommunikationssignals;
- Bestimmen, zumindest teilweise basierend auf der zumindest einen bestimmten Signalstärke des zumindest einen empfangenen drahtlosen Kommunikationssignals, einer Standortindikation des empfangenden Transportfahrzeugs, wobei die Standortindikation indikativ für einen Standort des empfangenden Transportfahrzeugs ist,
- Übermitteln, mittels einer drahtlosen Sendevorrichtung des empfangenden Transportfahrzeugs, der Standortindikation an eine weitere Vorrichtung, wobei die weitere Vorrichtung von dem Transportfahrzeug getrennt ist.

Das offenbarte Verfahren wird beispielsweise durch eine Vorrichtung, zum Beispiel eine Steuereinheit für das Transportfahrzeug, insbesondere eine Telematikeinheit für das Transportfahrzeug, ausgeführt.

Dementsprechend wird gemäß der Erfindung ferner eine Vorrichtung offenbart, wobei die Vorrichtung Mittel eingerichtet zur Ausführung des offenbarten Verfahrens umfasst. Die offenbarte Vorrichtung ist beispielsweise das Transportfahrzeug oder ein Teil des Transportfahrzeugs. Wenn im Folgenden beschrieben ist, dass ein Transportfahrzeug einen Schritt ausführt, ist damit unter anderem offenbart, dass die Vorrichtung den Schritt ausführt oder steuert.

Die Mittel können Hardware- und/oder Software-Komponenten umfassen. Die Mittel können beispielsweise mindestens einen Speicher mit Programmanweisungen eines Computerprogramms (z.B. des unten offenbarten Computerprogramms) und mindestens einen Prozessor ausgebildet zum Ausführen von Programmanweisungen aus dem mindestens einen Speicher umfassen. Dementsprechend soll auch eine Vorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, das offenbarte Verfahren auszuführen. Es versteht sich, dass die offenbarte Vorrichtung auch andere nicht aufgeführte Mittel umfassen kann.

Alternativ oder zusätzlich können die Mittel ferner eine oder mehrere Kommunikationsschnittstellen (z.B. eine oder mehrere drahtgebundene und/oder drahtlose Kommunikationsschnittstellen) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass die Vorrichtung gemäß dem zweiten Aspekt der Erfindung auch andere nicht aufgeführte Mittel umfassen kann.

Ferner wird ein Computerprogramm offenbart, wobei das Computerprogramm Programmanweisungen umfasst, die dazu ausgebildet sind, bei Ausführung durch mindestens einen Prozessor eine Vorrichtung (z.B. die oben offenbarte Vorrichtung) zu veranlassen, das Verfahren auszuführen.

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Das offenbarte Verfahren, die offenbarte Vorrichtung und das offenbarte Computerprogramm dienen beispielsweise zum Bestimmen eines Standorts des Transportfahrzeugs.

Im Folgenden werden die Eigenschaften des offenbarten Verfahrens (im Folgenden auch als "Verfahren" bezeichnet), der offenbarten Vorrichtung (im Folgenden auch als "Vorrichtung" bezeichnet) sowie des offenbarten Computerprogramms (im Folgenden auch als "Computerprogramm" bezeichnet) - teilweise beispielhaft - beschrieben. Es versteht sich, dass das Verfahren, die Vorrichtung und das Computerprogramm zueinander korrespondieren, so dass die Offenbarung eines Merkmals für eine dieser Kategorien als Offenbarung eines korrespondierenden Merkmals für die anderen Kategorien verstanden werden soll.

Unter einem Transportfahrzeug soll insbesondere (i) ein Nutzfahrzeuggespann oder (ii) ein Nutzfahrzeuganhänger, insbesondere ein Nutzfahrzeuganhänger für ein Straßenfahrzeug wie ein Starrdeichselanhänger oder ein Gelenkdeichselanhänger oder ein Sattelauflieger verstanden werden. Solche Nutzfahrzeuganhänger sind insbesondere für den Transport von Gütern, vorzugsweise Stückgütern, im öffentlichen Straßenverkehr vorgesehen. Zu diesem Zweck weisen Nutzfahrzeuganhänger unterschiedliche Arten von Nutzfahrzeugaufbauten auf, welche der Aufnahme der zu transportierenden Güter in einem Laderaum dienen. So sind beispielsweise Kofferaufbauten mit festen Seitenwänden, einer festen Stirnwand, einer durch Flügeltüren gebildeten Rückwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern. Dementsprechend soll unter einem Nutzfahrzeugaufbau beispielsweise ein Kofferaufbau, ein Planenaufbau und/oder ein Curtainsider verstanden werden.

Der Nutzfahrzeuganhänger ist beispielsweise eingerichtet, mit einem Zugfahrzeug gekoppelt zu werden, um ein Nutzfahrzeuggespann mit dem Zugfahrzeug zu bilden. Zu diesem Zweck können der Nutzfahrzeuganhänger und das Zugfahrzeug beispielsweise jeweils zueinander korrespondierende Kopplungsmittel umfassen, die eingerichtet sind, um eine Verbindung (z.B. eine mechanische Verbindung und/oder eine elektrische Verbindung und/oder eine pneumatische Verbindung) zwischen dem Nutzfahrzeuganhänger und dem Zugfahrzeug herzustellen. Zum Beispiel umfassen die zueinander korrespondierenden Verbindungsmittel korrespondierende Teile eines Kupplungssystems wie einer Sattelkupplung, einer Bolzenkupplung oder einer Kugelkopfkupplung. Wenn das Zugfahrzeug mit dem Nutzfahrzeuganhänger (z.B. durch die oben offenbarten zueinander korrespondierenden Verbindungsmittel) verbunden ist, bilden das jeweilige Zugfahrzeug und der jeweilige Nutzfahrzeuganhänger beispielsweise ein Nutzfahrzeuggespann (z.B. einen Lastzug und/oder einen Sattelzug), so dass das jeweilige Zugfahrzeug den jeweiligen Nutzfahrzeuganhänger zieht.

Das Verfahren wird insbesondere von einem empfangenden Transportfahrzeug ausgeführt. Das Transportfahrzeug kann sich beispielsweise während der Ausführung des Verfahrens einem Stellplatz annähern, sich auf einem Stellplatz stationär befinden und/oder sich entlang von zumindest einem oder mehreren Stellplätzen bewegen. Beispielsweise befindet sich das empfangende Transportfahrzeug während der Ausführung des Verfahrens auf einem Gelände mit einer Mehrzahl von Stellplätzen, beispielsweise einem Trailer Yard.

Das Verfahren umfasst ein Empfangen zumindest eines drahtlosen Kommunikationssignals. Beispielsweise kann eine Komponente des Transportfahrzeugs, beispielsweise die Telematikeinheit oder eine (z.B. mit der Telematikeinheit verbundene) drahtlose Kommunikationsvorrichtung, das Kommunikationssignal empfangen. Das Transportfahrzeug kann beispielsweise dazu eingerichtet sein, fortlaufend drahtlose Kommunikationssignale zu empfangen. Zusätzlich oder alternativ kann das Transportfahrzeug beispielsweise dazu eingerichtet sein, unterhalb einer vorgegebenen Schwellwertgeschwindigkeit drahtlose Kommunikationssignale zu empfangen. Die Schwellwertgeschwindigkeit kann beispielsweise kleiner oder gleich 30 km/h, 20 km/h, 15 km/h, 10 km/h, 5 km/h, 2 km/h, 1 km/h oder 0 km/h sein. Auch eine Rückwärtsfahrt mit negativen Geschwindigkeiten kann ein Empfangen von Kommunikationssignalen begründen.

Beispielsweise kann das Verfahren ein (z.B. aktives) Anfordern eines drahtlosen Kommunikationssignals umfassen, beispielsweise vor dem Empfangen des drahtlosen Kommunikationssignals. Beispielsweise kann das empfangende Transportfahrzeug seinerseits ein Anforderungssignal, insbesondere ein drahtloses Anforderungssignal, aussenden. Beispielsweise kann das Transportfahrzeug dazu eingerichtet sein, unterhalb einer vorgegebenen Schwellwertgeschwindigkeit ein oder mehrere Anforderungssignale auszusenden. Die Schwellwertgeschwindigkeit kann beispielsweise kleiner oder gleich 30 km/h, 20 km/h, 15 km/h, 10 km/h, 5 km/h, 2 km/h, 1 km/h oder 0 km/h sein. Das Anforderungssignal kann beispielsweise derart konfiguriert sein, dass zumindest ein sendendes Transportfahrzeug, basierend auf einem Empfang/en des Anforderungssignals, ein drahtloses Kommunikationssignale aussendet, welches von dem empfangenden Transportfahrzeug empfangen werden kann. Alternativ oder zusätzlich kann das drahtlose Kommunikationssignale ohne vorausgehendes Anforderungssignal empfangen werden.

Das drahtlose Kommunikationssignal kann beispielsweise ein elektromagnetisches Signal einer Funkvorrichtung sein, welche zur (z.B. bidirektionalen) Übertragung von Informationen über eine drahtlose Schnittstelle eingerichtet ist. Insbesondere ist das drahtlose Kommunikationssignal zu unterscheiden von Signalen, welche nicht zur (insbesondere bidirektionalen) Informationsübertragung eingerichtet sind, beispielsweise Signale eines satellitenbasierten Positionierungssystems. Das drahtlose Kommunikationssignal kann ein Signal eines lokalen Kommunikationsstandards sein wie beispielsweise ein Wireless Local Area Network, WLAN, Bluetooth oder Zigbee Signal. Zu einem lokalen Kommunikationsstandard zählt insbesondere kein Mobilfunkstandard wie 2G/3G/4G/5G/6G (siehe 3gpp.org).

Das drahtlose Kommunikationssignal stammt von zumindest einem sendenden Transportfahrzeug. Auch können mehrere drahtlose Kommunikationssignale von jeweils einem aus einer Mehrzahl von sendenden Transportfahrzeugen empfangen werden. Das sendenden Transportfahrzeug kann beispielsweise einen temporär festen Standort aufweisen. Beispielsweise kann das sendende Transportfahrzeug auf einem Stellplatz, beispielsweise auf dem Gelände, auf welchem sich das empfangende Transportfahrzeug befindet, beispielsweise auf einem Trailer Yard, positioniert sein. Beispielsweise kann das Empfangen eines drahtlosen Kommunikationssignale von dem sendenden Transportfahrzeug darauf hinweisen, dass das sendende Transportfahrzeug stationär (z.B. geparkt) ist. Beispielsweise kann bekannt sein, dass das sendende Transportfahrzeug (z.B. nur) dann drahtlose Kommunikationssignale aussendet, wenn es sich aktuell nicht bewegt und/oder geparkt ist.

Beispielsweise kann das Empfangen des drahtlosen Kommunikationssignals, beispielsweise ferner, ein Bestimmen einer Art des empfangenen drahtlosen Kommunikationssignals umfassen. Beispielsweise kann somit zwischen verschiedenen Arten von drahtlosen Kommunikationssignalen differenziert werden, beispielsweise anhand von in dem drahtlosen Kommunikationssignale enthaltener und/oder damit übertragener Informationen (z.B. einer Kennung eines Senders), einem oder mehrerer genutzter Frequenzspektren, einer genutzten Modulationsart (z.B. Frequenzmodulation, Amplitudenmodulation und/oder Phasenmodulation) und/oder einer genutzten Codierung. Beispielsweise kann das Empfangen des drahtlosen Kommunikationssignals auf drahtlose Kommunikationssignale eines bestimmten drahtlosen Kommunikationsstandards, beispielsweise Wireless Local Area Network, WLAN, Bluetooth, oder Zigbee, beschränkt sein oder alternativ ein Empfangen verschiedener und/oder weiterer Arten von drahtlosen Kommunikationssignalen umfassen.

Das Verfahren kann ferner das Bestimmen einer Signalstärke des zumindest einen empfangenen drahtlosen Kommunikationssignals umfassen. Die Signalstärke kann beispielsweise basierend auf dem zumindest einen empfangenen drahtlosen Kommunikationssignal bestimmt werden. Beispielsweise kann die Bestimmung der Signalstärke durch eine drahtlose Kommunikationsschnittstelle, z.B. eine drahtlose Kommunikationsschnittstelle, z.B. in Form einer Funkschnittstelle, des empfangenden Transportfahrzeugs durchgeführt werden.

Beispielsweise kann das Bestimmen der Signalstärke ohne oder unabhängig von einer Herstellung einer kommunikativen Verbindung zwischen dem empfangenden Transportfahrzeug und dem sendenden Transportfahrzeug erfolgen. Beispielsweise kann das empfangende Transportfahrzeug (z.B. rein) passiv drahtlose Kommunikationssignale seiner Umgebung empfangen, insbesondere von sendenden Transportfahrzeugen, ohne selbst in Reaktion auf ein Empfangen der Kommunikationssignale entsprechende Rückmeldungen zum Aufbau einer drahtlosen Funkverbindung auszusenden. Das Verfahren kann somit ausgeführt werden, ohne, dass das empfangende Transportfahrzeug mit dem sendenden Transportfahrzeug eine drahtlose Kommunikationsverbindung aufbaut und/oder darüber in Informationsaustausch tritt. Alternativ oder zusätzlich kann eine drahtlose Kommunikationsverbindung zwischen dem empfangenden Transportfahrzeug und dem sendenden Transportfahrzeug aufgebaut werden und/oder hierüber Informationen ausgetauscht werden.

Auch kann das empfangende Transportfahrzeug mit zumindest einem der sendenden Transportfahrzeuge eine Kommunikationsverbindung aufbauen.

Zusätzlich oder alternativ kann das empfangende Transportfahrzeug seinerseits zumindest ein drahtloses Kommunikationssignal aussenden. Beispielsweise kann das empfangende Transportfahrzeug, ähnlich zu dem sendenden Transportfahrzeug (s.o.) eingerichtet sein, bei Geschwindigkeiten unterhalb einer Schwellwertgeschwindigkeit drahtlose Kommunikationssignale auszusenden. Die Schwellwertgeschwindigkeit kann beispielsweise kleiner oder gleich 30 km/h, 20 km/h, 15 km/h, 10 km/h, 5 km/h, 2 km/h, 1 km/h oder 0 km/h betragen. Auch eine Rückwärtsfahrt mit negativen Geschwindigkeiten kann ein Aussenden eines Kommunikationssignals begründen.

Es wurde erkannt, dass die Signalstärke eines empfangenen drahtlosen Kommunikationssignals einen Rückschluss auf eine Entfernung des empfangenden Transportfahrzeugs, beispielsweise einer drahtlosen Kommunikationsschnittstelle des empfangenden Transportfahrzeugs, zu einer Quelle des empfangenen Kommunikationssignals zulässt. Insbesondere wurde ferner erkannt, dass eine relative Distanz zu einem sendenden Transportfahrzeug einen Rückschluss auf einen Standort des empfangenden Transportfahrzeugs zulässt.

Das Verfahren umfasst ferner ein Bestimmen einer Standortindikation des empfangenden Transportfahrzeugs.

Eine Standortindikation kann insbesondere dazu geeignet sein, einen Rückschluss auf einen Standort des Transportfahrzeugs zuzulassen. Eine Standortindikation kann beispielsweise eine Information umfassen, welche einen Standort des Transportfahrzeugs angibt. Beispielsweise kann aber auch eine aus der empfangenen Signalstärke abgeleitete Information zum Standort des Transportfahrzeugs von der Standortindikation enthalten sein.

Zusätzlich oder alternativ kann eine Standortindikation eine Information umfassen, welche beispielsweise durch weitere Verarbeitung, beispielsweise durch Kombination mit weiteren Informationen, welche insbesondere nicht in der Standortindikation enthalten sind, einen Rückschluss auf den Standort des Transportfahrzeugs zulassen. Beispielsweise kann selbst die zumindest eine oder die mehreren empfangenen Signalstärken des einen oder der mehreren drahtlosen Kommunikationssignale als Standortindikation aufgefasst werden.

Ein Standort des sendenden Transportfahrzeugs kann beispielsweise relativ oder absolut bestimmt werden. Beispielsweise kann ein relativer Standort des sendenden Transportfahrzeugs, relativ zu einer Bezugsgröße, beispielsweise relativ zu einer Position eines anderen Gegenstandes, insbesondere relativ, z.B. als Distanz, zu einem Standort des sendenden Transportfahrzeugs angegeben werden. Beispielsweise kann ein Standort des Transportfahrzeugs absolut, beispielsweise als eine geographische Position oder als ein geographischer Bereich (z.B. Koordinaten in einem globalen Koordinatensystem) bestimmt werden. Insbesondere kann ein Standort des sendenden Transportfahrzeugs als ein Stellplatz auf einem Gebiet bestimmt werden, beispielsweise ein Stellplatz auf einem Trailer Yard.

Das Bestimmen basiert zumindest teilweise auf der zumindest einen bestimmten Signalstärke des zumindest einen empfangenen drahtlosen Kommunikationssignals. Beispielsweise kann basierend auf der zumindest einen bestimmten Signalstärke eine Entfernung zu dem sendenden Transportfahrzeug bestimmt werden. Beispielsweise kann ferner ein Standort zumindest eines des zumindest einen sendenden Transportfahrzeugs bekannt sein. Ein Standort des empfangenden Transportfahrzeugs kann hierauf basierend beispielsweise auf einen Bereich, beispielsweise im Wesentlichen einen Umkreis um den Standort des sendenden Transportfahrzeugs mit einem Radius entsprechend der aus der empfangenen Signalstärke abgeleiteten Entfernung zu dem sendenden Transportfahrzeug, bestimmt werden. Beispielsweise kann basierend auf einer Position, beispielsweise einem Stellplatz, des sendenden Transportfahrzeugs abgeleitet werden, dass das empfangende Transportfahrzeug auf einem (z.B. unmittelbar) benachbarten Stellplatz positioniert ist. Das Bestimmen der Standortindikation kann Informationen über die Umgebung mit einbeziehen. Beispielsweise kann eine Topologie eines Gebiets, in welchem sich das empfangende und/oder das zumindest eine sendende Transportfahrzeug befindet, bei der Bestimmung der Standortindikation berücksichtigt werden.

Das Bestimmen der zumindest einen Standortindikation kann zumindest zwei empfangene drahtlose Kommunikationssignale von zumindest zwei voneinander verschiedenen sendenden Transportfahrzeugen umfassen. Beispielsweise kann basierend auf den zumindest zwei empfangenen drahtlosen Kommunikationssignalen, insbesondere auf deren jeweiliger Signalstärke, eine genauere Bestimmung der Standortindikation des empfangenden Transportfahrzeugs gelingen. Beispielsweise kann ein Standort des empfangenden Transportfahrzeugs basierend auf einer Triangulation bestimmt werden.

Das Bestimmen der Standortindikation kann beispielsweise zumindest teilweise oder vollständig von dem empfangenden Transportfahrzeug durchgeführt werden. Alternativ oder zusätzlich kann das Bestimmen zumindest teilweise mittels zumindest einer oder mehreren von dem empfangenden Transportfahrzeug verschiedenen Vorrichtungen, beispielsweise mit dem empfangenden Transportfahrzeug kommunikativ verbundenen Vorrichtungen, beispielsweise einem oder mehreren Servern, durchgeführt werden.

Das Verfahren umfasst ferner ein Übermitteln, mittels einer drahtlosen Sendevorrichtung des empfangenden Transportfahrzeugs, der bestimmten Standortindikation an eine weitere Vorrichtung.

Beispielsweise kann die drahtlose Sendevorrichtung zu einer Kommunikationsvorrichtung des empfangenden Transportfahrzeugs korrespondieren, mittels welcher das drahtlose Kommunikationssignal empfangen wird.

Beispielsweise kann die Standortindikation mittels des gleichen oder eines andern drahtlosen Kommunikationsstandards übertragen werden, als den, über den das eine oder die mehreren drahtlosen Kommunikationssignale empfangen wurden.

Die weitere Vorrichtung kann beispielsweise ein Server, insbesondere ein von dem Transportfahrzeug entfernter Server sein. Ein solcher Server kann zum Beispiel sowohl ein physikalischer Server (d.h. ein Server mit Hardware- und/oder Software-Komponenten) als auch ein virtueller Server sein. Dabei soll unter einem virtuellen Server beispielsweise eine durch Hardware- und/oder Software-Komponenten eines oder mehrerer physikalischer Server (z.B. mehrere Server einer sogenannten Servercloud) bereitgestellte Serverfunktionalität verstanden werden, indem die mehreren physikalischen Server beispielsweise zusammenwirken, um die Funktionalität des virtuellen Servers bereitzustellen. Die weitere Vorrichtung kann beispielsweise ein Teil einer Infrastruktur eines Geländes sein, auf welchem das empfangende Transportfahrzeug fährt und/oder abgestellt ist und/oder wird, beispielsweise eines Trailer Yards. Beispielsweise kann die weitere Vorrichtung eines der zumindest einen sendenden Transportfahrzeuge umfassen.

Die drahtlose Sendevorrichtung kann der drahtlosen Empfangsvorrichtung entsprechen. Alternativ können die beiden Vorrichtungen verschieden voneinander sein.

In beispielhaften Ausführungsformen des ersten Aspekts, wird vorgeschlagen, dass
- die drahtlose Empfangsvorrichtung eine WLAN-Empfangsvorrichtung ist,
- das drahtlose Kommunikationssignal ein WLAN-Signal ist und/oder
- die drahtlose Sendevorrichtung eine WLAN-Sendevorrichtung ist.

Das drahtlose Kommunikationssignal kann beispielsweise ein Wireless Local Area Network, WLAN-Signal sein.

Solche WLAN-Kommunikationsnetzwerke sind beispielsweise in den Standards der IEEE 802.1 1-Familie standardisiert, die derzeit im Internet unter https://www.ieee.org abgerufen werden können. Die Reichweite von entsprechenden WLAN-Signalen beträgt typischerweise nicht mehr als 100 m, so dass diese drahtlosen lokalen Kommunikationsnetzwerke gemäß den IEEE 802.1 1-Spezifikationen vorliegend als lokale Kommunikationstechnologie verstanden werden sollen.

Beispielsweise kann das empfangende Transportfahrzeug dazu eingerichtet sein, WLAN-Signale seiner Umgebung zu empfangen. Das empfangende Transportfahrzeug kann beispielsweise einen Scan der WLAN-Umgebung vornehmen, beispielsweise wenn es sich unterhalb der Schwellwertgeschwindigkeit bewegt und/oder rückwärts fährt.

Es wurde erkannt, dass heutige Transportfahrzeuge oft ein eigenes WLAN-Netz aufspannen. Gleichzeitig wurde erkannt, dass WLAN-Sender eine verlässliche Quelle von Standortinformationen darstellen können.

Entsprechend dem drahtlosen Kommunikationssignal kann beispielsweise die drahtlose Empfangsvorrichtung des empfangenden Transportfahrzeugs eine WLAN-Empfangsvorrichtung sein.

Auch die drahtlose Sendevorrichtung, mittels derer die Standortindikation übermittelt wird, kann eine WLAN-Sendevorrichtung sein. Auch kann die Sendevorrichtung einen von der Empfangsvorrichtung verschiedenen Kommunikationsstandard einsetzen, beispielsweise Bluetooth oder Zigbee. Auch kann andersherum die drahtlose Empfangsvorrichtung einen von WLAN abweichenden Kommunikationsstandard verwenden, beispielsweise Bluetooth oder Zigbee, während die Sendevorrichtung eine WLAN-Sendevorrichtung ist.

Gleichermaßen können das drahtlose Kommunikationssignal, die drahtlose Empfangsvorrichtung sowie die drahtlose Sendevorrichtung (z.B. alle) auch einen (z.B. gemeinsamen) anderen Kommunikationsstandard (z.B. als WLAN) einsetzen, beispielsweise Bluetooth, Zigbee und/oder Kombinationen hieraus. Ein Bluetooth-Signal ist ein Signal gemäß der Bluetooth-Spezifikationen. Die Reichweite von Bluetooth-Signalen beträgt typischerweise nicht mehr als 100 m, so dass Bluetooth vorliegend als lokale Kommunikationstechnologie verstanden werden soll. Die Bluetooth-Spezifikationen sind derzeit im Internet unter www.bluetooth.org erhältlich.

In beispielhaften Ausführungsformen des ersten Aspekts, wird vorgeschlagen, dass
- das drahtlose Kommunikationssignal eine Identifikation des sendenden Transportfahrzeugs umfasst und/oder
- das drahtlose Kommunikationssignal eine Standortindikation des sendenden Transportfahrzeugs umfasst.

Das drahtlose Kommunikationssignal kann eine Identifikation des sendenden Transportfahrzeugs umfassen. Eine Identifikation kann beispielsweise eine in dem Kommunikationssignal enthaltene Information sein, die einen Rückschluss auf das sendende Transportfahrzeug zulässt, beispielsweise eine ID, ein Fingerabdruck und/oder eine eindeutige Kennung. Beispielsweise kann ein Service Set Identifier (SSID) in einem WLAN-Signal enthalten sein. Die Identifikation kann beispielsweise dazu dienen oder dafür geeignet sein, von dem sendenden Transportfahrzeug ausgesendete drahtlose Kommunikationssignale von drahtlosen Kommunikationssignalen anderen Ursprungs zu unterscheiden.

Das drahtlose Kommunikationssignal kann beispielsweise eine Standortindikation des sendenden Transportfahrzeugs umfassen. Beispielsweise kann eine Standortindikation des sendenden Fahrzeugs indikativ für einen Standort des sendenden Transportfahrzeugs sein. Die Standortindikation kann damit eine relative oder absolute Position des sendenden Transportfahrzeugs angeben, beispielsweise eine geographische Position oder einen geographischen Bereich und/oder einen Stellplatz, auf welchem das sendende Transportfahrzeug steht.

Eine Standortindikation des sendenden Transportfahrzeugs, welche von dem drahtlosen Kommunikationssignal umfasst ist, kann beispielsweise von dem empfangenden Transportfahrzeugen dazu verwendet werden, einen Standort des empfangenden Transportfahrzeugs zu bestimmen. Beispielsweise kann die empfangene Standortindikation des sendenden Transportfahrzeugs mit der Signalstärke des empfangenen Kommunikationssignals kombiniert werden, um eine Standortinformation des empfangenden Transportfahrzeugs zu ermitteln.

Das zumindest eine drahtlose Kommunikationssignal kann beispielsweise eine Indikation der Sendestärke umfassen. Ein Vergleich zwischen Sendestärke und empfangener Signalstärke kann beispielsweise einen Rückschluss auf die Distanz mit besonders hoher Genauigkeit zulassen.

In beispielhaften Ausführungsformen des ersten Aspekts, wird vorgeschlagen, dass
- das zumindest eine drahtlose Kommunikationssignal zumindest zwei drahtlose Kommunikationssignale von zumindest zwei voneinander verschiedenen sendenden Transportfahrzeugen umfasst.

Beispielsweise können die zumindest zwei drahtlosen Kommunikationssignale innerhalb einer vorgegebenen Zeitspanne empfangen werden. Beispielsweise kann eine Bestimmung der Standortindikation auf drahtlose Kommunikationssignale beschränkt werden, welche innerhalb von einer Zeitspanne von nicht mehr als 1 s, 2 s, 5 s, 15 s, 30 s, 1 min, 2 min, 5 min, 10 min, 30 min oder 1 h empfangen wurden.

Beispielsweise können die zumindest zwei drahtlosen Kommunikationssignale während einer Stillstandsphase des empfangenden Transportfahrzeugs (beispielsweise nachdem das empfangende Transportfahrzeug angehalten hat und bevor es wieder losgefahren ist) empfangen werden. Dadurch, dass die zumindest zwei drahtlosen Kommunikationssignale ausgehend von derselben Position des empfangenden Transportfahrzeugs empfangen werden, können die Informationen über jeweilige empfangene Signalstärken (z.B. und optional Positionen) der jeweiligen sendenden Transportfahrzeuge kombiniert werden, um eine genauere Bestimmung der Position des empfangenden Transportfahrzeugs zu erreichen. Beispielsweise können die zumindest zwei drahtlosen Kommunikationssignale mittels einer Triangulation kombiniert werden.

Durch den Empfang mehrerer drahtloser Kommunikationssignale kann eine genauere Bestimmung des Standorts des empfangenden Transportfahrzeugs erreicht werden.

In beispielhaften Ausführungsformen des ersten Aspekts, wird vorgeschlagen, dass
- die Signalstärke einer Empfangenen Signalstärke Indikation (RSSI), einem Signal-zu-Rauschen-Verhältnis (SNR), einer Signal-zu-Rauschen-plus-Interferenz-Verhältnis (SNIR) und/oder Kombinationen hieraus entspricht.

Die Signalstärke zumindest eines des einen oder der mehreren empfangenen Kommunikationssignale kann beispielsweise mit einer oder mehreren der genannten Metriken bestimmt werden. Beispielsweise kann eine empfangene Signalstärke, welche beispielsweise mit einem RSSI Wert angegeben werden kann, einen Rückschluss auf die Entfernung zu einem sendenden Transportfahrzeug zulassen, welcher unabhängig von Rausch- oder Interferenzeinflüssen sowie von weiteren Informationen wie einer Ankunftszeit von Signalen ist. Auf eine Synchronisation zwischen Sender und Empfänger ist ein RSSI Wert nicht angewiesen.

In beispielhaften Ausführungsformen des ersten Aspekts, wird vorgeschlagen, dass die Standortindikation
- auf zumindest zwei empfangenen drahtlosen Kommunikationssignalen basiert,
- auf zumindest einer Identifikation des zumindest einen sendenden Transportfahrzeugs basiert,
- auf zumindest einer Standortindikation des zumindest einen sendenden Transportfahrzeugs basiert.

Die Standortindikation kann beispielsweise auf zumindest zwei empfangenen drahtlosen Kommunikationssignalen basieren, insbesondere auf zwei von zwei verschiedenen sendenden Transportfahrzeugen gesendeten drahtlosen Kommunikationssignalen.

Die Standortindikation kann beispielsweise auf zumindest einer oder mehreren Identifikationen des zumindest einen oder der mehreren sendenden Transportfahrzeuge basieren. Beispielsweise können die Identifikationen herangezogen werden, um empfangene drahtlose Kommunikationssignale von mehreren sendenden Transportfahrzeugen voneinander zu differenzieren.

Beispielsweise können zusätzlich oder alternativ Identifikationen des einen oder der mehreren sendenden Transportfahrzeuge herangezogen werden, um damit assoziierte Informationen zu Standorten von zumindest einem oder mehreren der sendenden Transportfahrzeuge zu ermitteln. Beispielsweise kann das empfangende Transportfahrzeug über zumindest eine oder mehrere Assoziationen zwischen Identifikationen von zumindest einem oder mehreren sendenden Transportfahrzeugen und deren jeweiligen Standorten verfügen. Beispielsweise können derartige Assoziationen lokal in dem sendenden Transportfahrzeug abgelegt sein. Beispielsweise können die Assoziationen auch von einer weiteren Vorrichtung, beispielsweise einem Server, beispielsweise der weiteren Vorrichtung, abgerufen werden.

Beispielsweise können Transportfahrzeuge, beispielsweise das empfangende Transportfahrzeug, ihre jeweilige Standortindikation beispielsweise an einen Server, beispielsweise an die weitere Vorrichtung, beispielsweise an ein Bewirtschaftungssystem eines Trailer Yards übermitteln, beispielsweise gemeinsam mit einer Identifikation des (z.B. empfangenden) Transportfahrzeugs. Andere Transportfahrzeuge können diese Informationen beispielsweise wieder von dem Server abrufen und für ihre eigene Lokalisation verwenden.

In beispielhaften Ausführungsformen des ersten Aspekts, wird vorgeschlagen, dass die Standortindikation umfasst
- zumindest eine Signalstärke eines empfangenen drahtlosen Kommunikationssignals,
- zumindest eine Identifikation des zumindest einen sendenden Transportfahrzeugs,
- zumindest eine Standortindikation des zumindest einen sendenden Transportfahrzeugs, und/oder
- zumindest eine Abstandsinformation, wobei die Abstandsinformation einen Abstand zwischen dem empfangenden Transportfahrzeug und einem des zumindest einen sendenden Transportfahrzeugs angibt, insbesondere basierend auf der Signalstärke des empfangenen drahtlosen Kommunikationssignals von dem jeweiligen sendenden Transportfahrzeug.

Die Standortindikation kann einer empfangenen Signalstärke entsprechen. Beispielsweise kann in einer besonders ressourcensparenden Ausführung des Verfahrens die Signalstärke des einen oder der mehreren empfangenen drahtlosen Kommunikationssignale bestimmt werden und/oder diese (z.B. ohne weitere Verarbeitungsschritte) an die weitere Vorrichtung übermittelt werden.

Beispielsweise können alternativ oder zusätzlich mit der einen oder den mehreren empfangenen Signalstärken auch eine oder mehrere Identifikationen des oder der sendenden Transportfahrzeuge empfangen, bestimmt und/oder übermittelt werden. Die Identifikationen können es beispielsweise der weiteren Vorrichtung erlauben, die empfangenen Signalstärken den jeweiligen sendenden Transportfahrzeugen und/oder deren Standorten zuzuordnen.

Beispielsweise können alternativ oder zusätzlich mit der empfangenen Signalstärke und/oder der Identifikation des zumindest einen oder der mehreren sendenden Transportfahrzeuge eine Standortindikation des zumindest einen oder der mehreren sendenden Transportfahrzeuge empfangen, bestimmt und/oder übermittelt werden.

Beispielsweise können alternativ oder zusätzlich mit der empfangenen Signalstärke, der Identifikation des zumindest einen oder der mehreren sendenden Transportfahrzeuge und/oder der Standortindikation des zumindest einen oder der mehreren sendenden Transportfahrzeuge eine Abstandsinformation bestimmt und/oder übermittelt werden. Die Abstandsinformationen kann insbesondere basierend auf der Signalstärke des jeweils empfangenen Kommunikationssignals von dem jeweiligen sendenden Transportfahrzeug bestimmt werden.

Die übermittelte Standortindikation kann es der weiteren Vorrichtung ermöglichen, den Standort des empfangenden Transportfahrzeugs zu bestimmen. Beispielsweise können hierbei bekannte Standorte der sendenden Transportfahrzeuge oder weitere Informationen wie beispielsweise eine Topologie einer Umgebung des empfangenden Transportfahrzeugs und/oder der sendenden Transportfahrzeuge herangezogen werden. Dadurch, dass das empfangende Transportfahrzeug den eigenen Standort nicht oder nur teilweise selbst bestimmt, kann das Verfahren besonders ressourcen- und energiesparend durchgeführt werden.

Die Standortindikation kann insbesondere frei von einer Standortinformation sein. Weitere Informationen können benötigt sein, um aus einer derartigen Standortindikation eine Standortinformation abzuleiten.

In beispielhaften Ausführungsformen des ersten Aspekts, wird vorgeschlagen, dass die Standortindikation umfasst
- eine Standortinformation des empfangenden Transportfahrzeugs, insbesondere eine absolute oder relative Standortinformation, insbesondere eine Stellplatz-Identifikation und/oder eine geografische Position.

Gemäß einem Ausführungsbeispiel bestimmt das empfangende Transportfahrzeug seine Standortinformation als die Standortindikation. Die Standortindikation selbst genügt in diesem Ausführungsbeispiel damit, um den Standort des empfangenden Fahrzeuges zu kennen.

In diesem Falle umfasst das Verfahren die Auswertung der zumindest einen oder mehreren empfangenen Signalstärken des zumindest einen oder der mehreren drahtlosen Kommunikationssignale und das Bestimmen einer Standortinformation, basierend zumindest auf den empfangenen Signalstärken. Beispielsweise kann somit das empfangende Transportfahrzeug seine Standortinformation selbstständig bestimmen.

Beispielsweise kann neben der Signalstärke des zumindest einen empfangenden drahtlosen Kommunikationssignals auf eine oder mehrere empfangene, beispielsweise in dem drahtlosen Kommunikationssignal empfangene, Identifikationen und/oder Standortindikationen des zumindest einen oder der mehreren sendenden Transportfahrzeuge zurückgegriffen werden. Auch können über die Signalstärke hinausgehende Informationen auf anderem Wege als über das eine oder die mehreren drahtlosen Kommunikationssignale erhalten werden, beispielsweise von einer weiteren Vorrichtung, beispielsweise von einem Server, beispielsweise ausgehend von einem Bewirtschaftungssystem eines Trailer Yards.

In beispielhaften Ausführungsformen des ersten Aspekts, wird vorgeschlagen, dass
- das Bestimmen der Standortindikation eine Bestimmung des nächstliegenden sendenden Transportfahrzeugs, eine Triangulation basierend auf zumindest zwei Kommunikationssignalen von zumindest zwei sendenden Transportfahrzeugen und/oder die Anwendung eines Simultanen Kartierungs- und Lokalisierungs-Algorithmus (SLAM) umfasst.

Beispielsweise kann eine Standortindikation des empfangenden Transportfahrzeugs basierend auf einer Bestimmung eines nächstliegenden sendenden Transportfahrzeug erfolgen. Beispielsweise kann das empfangende Transportfahrzeug, von welchem Kommunikationssignale mit der höchsten Signalstärke, insbesondere verglichen mit der Signalstärke der anderen sendenden Transportfahrzeuge, von welchen ebenfalls drahtlose Kommunikationssignale empfangen werden, als das nächstliegende Transportfahrzeug bestimmt werden. In erster Näherung kann der Standort des empfangenden Transportfahrzeugs als der Standort des nächstliegenden sendenden Transportfahrzeugs bestimmt werden oder beispielsweise als ein in der Nähe des nächstliegenden sendenden Transportfahrzeugs positionierter Stellplatz (beispielsweise ein benachbarter Stellplatz). Eine derartige Bestimmung der Standortindikation, basierend auf eine Bestimmung des nächstliegenden sendenden Transportfahrzeugs, kann besonders schnell und ressourcenschonend erfolgen.

Alternativ oder zusätzlich kann eine Bestimmung der Standortindikation des empfangenden Transportfahrzeugs auf zumindest zwei empfangenen drahtlosen Kommunikationssignalen von zumindest zwei verschiedenen sendenden Transportfahrzeugen, basieren. Auch können mehr als zwei empfangene drahtlose Kommunikationssignale, beispielsweise zumindest 3,4, 5 oder mehr empfangende drahtlose Kommunikationssignale für die Bestimmung der Standortindikation herangezogen werden. Mehrere empfangene drahtlose Kommunikationssignale und deren jeweilige Signalstärke können beispielsweise per Triangulation zu einer Standortinformation ausgewertet werden.

Alternativ oder zusätzlich kann ein Simultaner Kartierungs- und Lokalisierungs-Algorithmus (SLAM) herangezogen werden, welcher empfangende drahtlose Kommunikationssignale verschiedener sendender Transportfahrzeuge heranzieht und sowohl die Position der sendenden Transportfahrzeuge als auch die Position des empfangenden Transportfahrzeugs schätzts.

In beispielhaften Ausführungsformen des ersten Aspekts, wird vorgeschlagen, dass
- die weitere Vorrichtung ein Transportfahrzeug ist, insbesondere eines des zumindest einen sendenden Transportfahrzeugs, und/oder
- die weitere Vorrichtung ein Lager ist, insbesondere ein Lager, mit dem das Transportfahrzeug in einem Warenaustausch steht.

Beispielsweise kann die Standortindikation an ein Transportfahrzeug, insbesondere zumindest eines der zumindest einen sendenden Transportfahrzeuge, übermittelt werden. Die weitere Vorrichtung entspricht in diesem Falle einem Transportfahrzeug. Beispielsweise kann die Standortindikation via zumindest ein Transportfahrzeug an eine oder mehrere von dem Transportfahrzeug verschiedene Vorrichtungen weitergeleitet werden.

Beispielsweise kann die weitere Vorrichtung, an welche die Standortindikation übermittelt wird, ein Server sein, beispielsweise ein Server, welcher mit dem Trailer Yard in Verbindung steht und/oder ein Cloud-System. Beispielsweise kann die weitere Vorrichtung Teil eines Bewirtschaftungssystems des Trailer Yards sein. Beispielsweise kann die weitere Vorrichtung ein Lager umfassen, insbesondere ein Lager, mit dem das empfangende Transportfahrzeug in Warenaustausch steht. Es kann sich bei dem Lager also insbesondere um ein Warenlager handeln.

In beispielhaften Ausführungsformen des ersten Aspekts umfasst das Verfahren ferner
- Empfangen, von der weiteren Vorrichtung, einer Rückmeldung, wobei insbesondere die Rückmeldung
   - mittels der drahtlosen Empfangsvorrichtung empfangen wird,
   - eine Standortinformation umfasst und/oder
   - eine Lokalisierungsbestätigung und/oder eine Lokalisierungsfehlerindikation umfasst.

Gemäß einem Ausführungsbeispiel kann das Verfahren ferner ein Empfangen einer Rückmeldung von der weiteren Vorrichtung umfassen.

Die Rückmeldung kann beispielsweise mittels der drahtlosen Empfangsvorrichtung, mittels derer das zumindest eine oder die mehreren drahtlosen Kommunikationssignale empfangen wurden, empfangen werden. Zusätzlich oder alternativ kann auch eine davon verschiedene Kommunikationsvorrichtung zum Empfangen der Rückmeldung genutzt werden und/oder ein anderer Kommunikationsstandard.

Die Rückmeldung kann beispielsweise eine Standortinformation umfassen. Beispielsweise, wenn das Verfahren nicht ein Bestimmen einer Standortinformation (z.B. durch die Vorrichtung, die das Verfahren ausführt) umfasst und/oder die Standortindikation (z.B. welche an die weitere Vorrichtung übermittelt wird) frei von einer Standortinformation ist, kann die weitere Vorrichtung die Standortinformation bestimmen und per Rückmeldung an das empfangende Transportfahrzeug zurückmelden.

Beispielsweise kann die Rückmeldung eine Lokalisierungsbestätigung und/oder eine Lokalisierungsfehlerindikation umfassen. Insbesondere wenn die Standortindikation frei von einer Standortinformation ist und die weitere Vorrichtung die Standortinformation zu bestimmen hat, kann eine Rückmeldung dieser Art (insbesondere eine Lokalisierungsfehlerindikation) der weiteren Vorrichtung ermöglichen, weitere Standortindikationen anzufordern. Beispielsweise kann das empfangende Transportfahrzeug ein weiteres Anforderungssignal aussenden.

Das Verfahren kann beispielsweise ferner umfassen, basierend auf einer empfangenen Lokalisierungsfehlerindikation, weitere Standortindikationen an die weitere Vorrichtung zu übermitteln.

Alternativ kann die weitere Vorrichtung mit der Lokalisierungsbestätigung den Standortbestimmungsvorgang beenden. Beispielsweise kann das empfangende Transportfahrzeug daraufhin ein Empfangen von drahtlosen Kommunikationssignalen einstellen. Auch kann beispielsweise das empfangende Transportfahrzeug ein Beendigungssignal aussenden, was zumindest einem des zumindest einen sendenden Transportfahrzeugs signalisiert, dass keine weiteren drahtlosen Kommunikationssignale für die Lokalisierung mehr benötigt werden.

In beispielhaften Ausführungsformen des ersten Aspekts, wird vorgeschlagen, dass
- das empfangende Transportfahrzeug einen Energiespeicher umfasst.

Ein Energiespeicher kann beispielsweise ein elektrochemischer Speicher wie beispielsweise eine Batterie, beispielsweise eine Lithium-Ionen Batterie, eine Bleibatterie, eine Nickel-Cadmium-Batterie und/oder Kombinationen hieraus umfassen.

In beispielhaften Ausführungsformen des ersten Aspekts, wird vorgeschlagen, dass
- das empfangende Transportfahrzeug bei Ausführung des Verfahrens stationär ist, insbesondere geparkt, und/oder
- das empfangende Transportfahrzeug das Verfahren nach einem Übergang aus einem fahrenden Betriebsmodus in einen stehenden Betriebsmodus ausführt, insbesondere nach einem Einparken.

Durch eine Ausführung des Verfahrens im stationären Zustand kann unter anderem sichergestellt werden, dass die empfangenen drahtlosen Kommunikationssignale alle mit einer von einem gleichbleibenden Standort des empfangenden Transportfahrzeugs abhängigen Signalstärke empfangen werden.

Beispielsweise kann das Verfahren bei einem Übergang aus einem fahrenden Betriebsmodus in einen stehenden Betriebsmodus ausgeführt werden. Hierdurch wird eine möglichst frühzeitige Standortbestimmung erreicht.

In beispielhaften Ausführungsformen des ersten Aspekts, wird vorgeschlagen, dass - das Verfahren von einer Steuervorrichtung des empfangenden Transportfahrzeugs gesteuert und/oder kontrolliert wird, insbesondere von einer Telematikeinheit.

In beispielhaften Ausführungsformen des ersten Aspekts, wird vorgeschlagen, dass das empfangende Transportfahrzeug eines der folgenden Fahrzeuge ist:
- ein Nutzfahrzeuggespann umfassend ein Zugfahrzeug und einen Nutzfahrzeuganhänger,
- ein Nutzfahrzeuganhänger, insbesondere ein Sattelauflieger.

Gemäß einem weiteren Aspekt der Erfindung wird offenbart: Ein Computerprogramm umfassend Programmanweisungen, die dazu ausgebildet sind, bei Ausführung durch mindestens einen Prozessor einer Vorrichtung, die Vorrichtung zu veranlassen, das Verfahren gemäß dem ersten Aspekt auszuführen.

Gemäß einem weiteren Aspekt der Erfindung wird eine Vorrichtung offenbart, umfassend Mittel eingerichtet zur Ausführung des Verfahrens nach dem ersten Aspekt. Beispielsweise kann die Vorrichtung einen oder mehrere

Prozessoren zur Ausführung und/oder Steuerung des Bestimmens einer Standortindikation und/oder des Bestimmens zumindest einer Signalstärke des zumindest einen drahtlosen Kommunikationssignals aufweisen. Ferner kann die Vorrichtung zumindest eine oder mehrere Kommunikationsvorrichtungen (beispielsweise die drahtlose Empfangsvorrichtung und die drahtlose Sendevorrichtung) umfassen, welche zum Empfangen des zumindest einen drahtlosen Kommunikationssignals, zum Übermitteln der Standortindikation und/oder zum Bestimmen der Signalstärke eingerichtet sind.

In beispielhaften Ausführungsformen wird vorgeschlagen, dass die Vorrichtung ein Transportfahrzeug oder ein

Teil des Transportfahrzeugs ist, insbesondere ein Nutzfahrzeuggespann umfassend ein Zugfahrzeug und einen Nutzfahrzeuganhänger, oder ein Nutzfahrzeuganhänger, insbesondere ein Sattelauflieger.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die Figuren sollen jedoch nur dem Zwecke der Verdeutlichung, nicht aber zur Bestimmung des Schutzbereiches der Erfindung dienen. Die Figuren sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Detaillierte Beschreibung einiger beispielhafter Ausführungsformen

Es zeigen:
- Fig. 1: eine schematische Darstellung einer beispielhaften Ausführungsform einer Vorrichtung gemäß der Erfindung;
- Fig. 2: eine schematische Darstellung einer beispielhaften Ausführungsform eines Transportfahrzeugs gemäß der Erfindung;
- Fig. 3a,b: schematische Darstellungen einer beispielhaften Ausführungsform der Erfindung; und
- Fig. 4: ein Flussdiagramm einer Ausführungsform eines Verfahrens gemäß der Erfindung

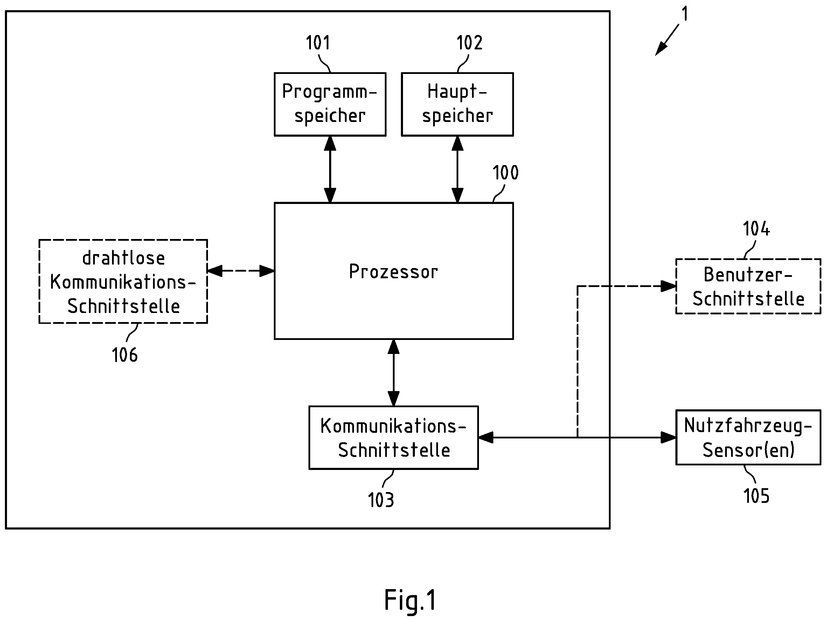

Fig. 1 zeigt eine schematische Darstellung einer Ausführungsform einer Vorrichtung 1 gemäß der Erfindung. Im Folgenden wird davon ausgegangen, dass die Vorrichtung 1 Teil eines Transportfahrzeugs in Form eines Nutzfahrzeuganhängers ist. Zum Beispiel kann die Vorrichtung 1 eine Steuereinheit und/oder Telematikeinheit des Nutzfahrzeuganhängers sein.

Die Vorrichtung 1 umfasst einen Prozessor 100 und verbunden mit dem Prozessor 100 einen ersten Speicher als Programmspeicher 101, einen zweiten Speicher als Hauptspeicher 102 und eine Kommunikationsschnittstelle 103.

Unter einem Prozessor soll beispielsweise ein Mikroprozessor (Engl. Central Processing Unit, CPU), eine Mikrokontrolleinheit, ein Mikrocontroller, ein digitaler Signalprozessor (DSP), eine Anwendungsspezifische Integrierte Schaltung (ASIC), ein Field Programmable Gate Array (FPGA), oder ein graphischer Prozessor (Engl: Graphics Processing Unit, GPU) verstanden werden. Es versteht sich, dass die Vorrichtung 1 auch mehrere Prozessoren 100 umfassen kann.

Der Prozessor 100 führt Programmanweisungen aus, die in Programmspeicher 101 gespeichert sind, und speichert beispielsweise Zwischenergebnisse oder Ähnliches in Hauptspeicher 102.

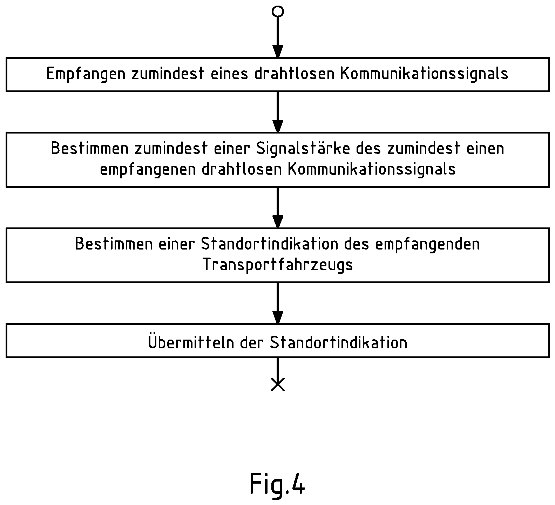

In dem Programmspeicher 101 sind beispielsweise Programmanweisungen gespeichert, die den Prozessor 100, wenn er die Programmanweisungen ausführt, veranlassen, das Verfahren gemäß der Erfindung (z.B. das Verfahren gemäß dem in Fig. 4 dargestellten Flussdiagramm) zumindest teilweise auszuführen und/oder zu steuern.

Der Programmspeicher 101 enthält ferner beispielsweise das Betriebssystem der Vorrichtung 1, das beim Starten der Vorrichtung 1 zumindest teilweise in Hauptspeicher 102 geladen und vom Prozessor 100 ausgeführt wird. Insbesondere wird beim Starten der Vorrichtung 1 zumindest ein Teil des Kerns des Betriebssystems in den Hauptspeicher 102 geladen und vom Prozessor 100 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Vorrichtung 1 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Der Hauptspeicher 102 und der Programmspeicher 101 können auch als ein Speicher ausgebildet sein. Alternativ können der Hauptspeicher 102 und/oder der Programmspeicher 101 jeweils durch mehrere Speicher gebildet werden. Ferner können der Hauptspeicher 102 und/oder der Programmspeicher 101 auch Teil des Prozessors 100 sein.

Der Prozessor 100 steuert die Kommunikationsschnittstelle 103, welche beispielsweise eingerichtet ist, Informationen mit anderen Komponenten des Nutzfahrzeuganhängers auszutauschen (z.B. zu senden und/oder zu empfangen). Die Kommunikationsschnittstelle 103 ist beispielsweise als Ethernet-, CAN-, K-Leitungs-, LIN- oder Flexray-Schnittstelle ausgebildet. Sie ist beispielsweise eingerichtet zur drahtgebundenen Kommunikation mit der optionalen Benutzerschnittstelle 104 und/oder einem oder mehreren Sensoren 105 des Nutzfahrzeuganhängers über ein Ethernet-Netzwerk oder ein CAN-, K-Leitungs-, LIN- oder Flexray-Bussystem des Nutzfahrzeuganhängers. Zum Beispiel kann die Vorrichtung 1 durch die Kommunikationsschnittstelle 103 Informationen an die Benutzerschnittstelle 104 und/oder Sensoren 105 senden und/oder von diesen empfangen. Ethernet ist zum Beispiel in den Standards der IEEE-802.3-Familie spezifiziert. CAN ist in den Standards der ISO 11898-Familie, K-Leitung ist in den Standards ISO 9141 und ISO 14230-1, LIN ist in den Standards der ISO 17987-Familie und FlexRay in den Standards der ISO 17458-Familie spezifiziert.

In Fig. 1 sind die Benutzerschnittstelle 104 und die Nutzfahrzeugsensoren 105 nicht als Teil der Vorrichtung 1 dargestellt. Es versteht sich jedoch, dass die Benutzerschnittstelle 104 und/oder die Nutzfahrzeugsensoren 105 auch vollständig oder teilweise Teil der Vorrichtung 1 sein kann/können, insbesondere dann, wenn die Vorrichtung 1 der Nutzfahrzeuganhänger ist sowie die Benutzerschnittstelle 104 und/oder die Nutzfahrzeugsensoren 105 Teil des Nutzfahrzeuganhängers ist/sind.

Eine Benutzerschnittstelle 104 ist beispielsweise eingerichtet, eine Information in Form einer Benutzereingabe zu erfassen und/oder eine Information an einen Benutzer auszugeben. Zum Beispiel ist die Benutzerschnittstelle 104 eine Tastatur, ein Bildschirm, ein berührungsempfindlicher Bildschirm, ein Lautsprecher, eine Hupe und/oder ein Mikrofon. Die Benutzerschnittstelle 104 ist beispielsweise Teil des Nutzfahrzeuganhängers oder eines mit dem Nutzfahrzeuganhänger gekoppelten Zugfahrzeugs.

Beispiele für die Nutzfahrzeugsensoren 105 sind ein Türöffnungssensor und/oder ein Ladegewichtssensor und/oder eine Kamera und/oder ein Erschütterungssensor und/oder ein Bewegungssensor.

Die Nutzfahrzeugsensoren 105 können zumindest teilweise Teil des Nutzfahrzeuganhängers und/oder Teil eines mit dem Nutzfahrzeuganhänger gekoppelten Zugfahrzeugs sein.

Ferner weist die Vorrichtung 1 eine durch den Prozessor 100 gesteuerte optionale drahtlose Kommunikationsschnittstelle 106 auf, über welche Informationen über einen drahtlosen Kommunikationspfad mit einer entfernten Vorrichtung ausgetauscht (z.B. gesendet und/oder empfangen werden können. Die drahtlose Kommunikationsschnittstelle 106 ist beispielsweise als Bluetooth-, WLAN-, und/oder Mobilfunk-Kommunikationsschnittstelle ausgebildet. Die Bluetooth-Spezifikationen sind derzeit im Internet unter www.bluetooth.org erhältlich. WLAN ist in den Standards der IEEE 802.11-Familie standardisiert, die derzeit im Internet unter https://www.ieee.org abgerufen werden können. Unter Mobilfunk sollen insbesondere Mobilfunkkommunikationssysteme wie ein 2G/3G/4G/5G/6G-Kommunikationssystem verstanden werden. Die Spezifikationen der 2G, 3G, 4G, 5G oder 6G Mobilfunkkommunikationssysteme werden derzeit durch das 3rd Generation Partnership Project (3GPP) entwickelt und können im Internet unter https://www.3gpp.org/ abgerufen werden.

Die Komponenten 100 bis 103 und 106 der Vorrichtung 1 sind beispielsweise über eines oder mehrere Bussysteme (z.B. ein oder mehrere serielle und/oder parallele Busverbindungen) kommunikativ und/oder operativ miteinander verbunden.

Es versteht sich, dass die Vorrichtung 1 neben den dargestellten Komponenten weitere Komponenten umfassen kann.

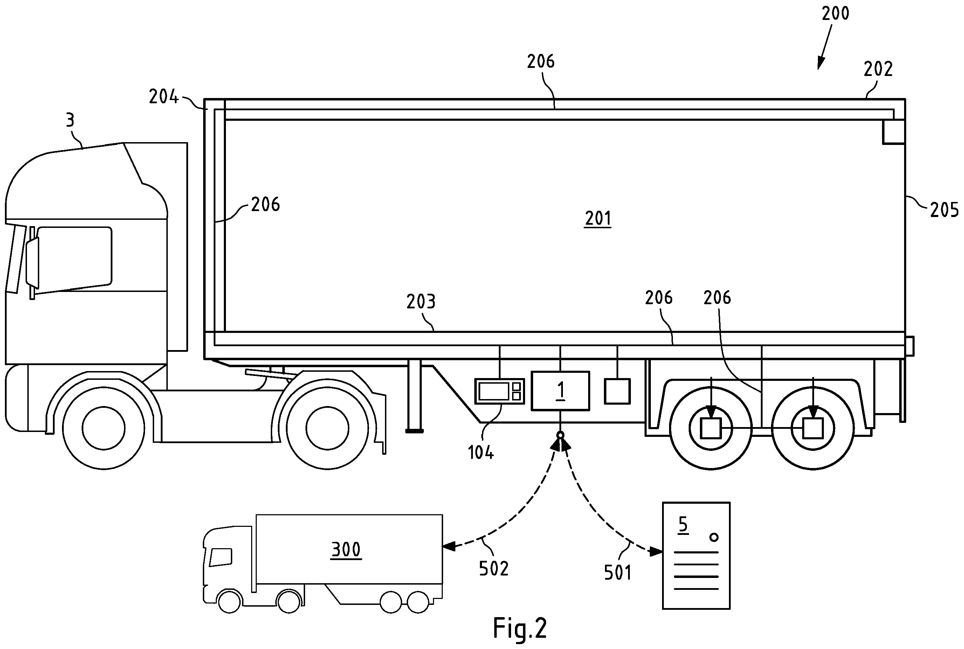

Fig. 2 zeigt eine schematische Darstellung einer beispielhaften Ausführungsform eines Nutzfahrzeuganhängers 200 als Teil eines Zuggespanns mit einem Zugfahrzeug gemäß der Erfindung. Der Nutzfahrzeuganhänger 200 ist ein Sattelauflieger. In dem Sattelauflieger 200 ist eine Vorrichtung 1 angeordnet. Im Folgenden wird beispielhaft davon ausgegangen, dass diese Vorrichtung 1 der in Fig. 1 dargestellten Vorrichtung 1 entspricht. Ferner ist in Fig. 2 eine weitere Vorrichtung in Form eines Servers 5 dargestellt.

Im Folgenden wird die beispielhafte Ausführungsform des Sattelaufliegers 200 anhand von Fig. 2 erläutert. Der Sattelauflieger 200 umfasst einen Laderaum 201. Der Laderaum 201 des Sattelaufliegers 200 wird oben durch das Laderaumdach 202 und unten durch den Laderaumboden 203 begrenzt. Ferner wird der Laderaum durch die Stirnwand 204 und die verschließbare Hecköffnung 205 sowie nicht dargestellte seitliche Begrenzungsflächen (z.B. Seitenplanen begrenzt). Die Hecköffnung 205 wird durch eine nicht dargestellte Hecktür, zum Beispiel eine Doppelflügeltür gebildet.

Ferner umfasst der Sattelauflieger 200 eine Benutzerschnittstelle 104, die in Fig. 2 beispielhaft als berührungsempfindlicher Bildschirm dargestellt ist. Die Benutzerschnittstelle 104 ist beispielsweise eingerichtet, eine Information in Form einer Benutzereingabe zu erfassen und die erfasste Information über die Verbindung 206 an die Vorrichtung 1 zu senden und/oder eine Information über die Verbindung 206 von der Vorrichtung zu empfangen und die empfangene Information an einen Benutzer auszugeben.

Die Verbindung 206 ist beispielsweise eine drahtgebundene Kommunikationsverbindung eines Ethernet-Netzwerks oder eines CAN-, K-Leitungs-, LIN- oder Flexray Bussystems des Sattelaufliegers 200.

Die Vorrichtung 1 kann über Kommunikationspfad 501 mit dem Server 5 kommunizieren, d.h. Informationen an den Server 5 senden und/oder vom Server 5 empfangen. Bei dem Server 5 kann es sich beispielsweise um einen Steuerungsserver und/oder einen Telematikserver und/oder einen Flottenmanagementserver handeln. Auch kann es sich bei dem Server 5 um einen Teil eines Bewirtschaftungssystems eines Trailer Yards handeln. Der Kommunikationspfad 501 umfasst zumindest einen drahtlosen Abschnitt. Daneben kann der Kommunikationspfad 501 weitere drahtlose und/oder drahtgebundene Abschnitte umfassen.

Ferner kann auch vorgesehen sein, dass die Vorrichtung 1 über den drahtlosen Kommunikationspfad 502 von einem sendenden Transportfahrzeug 300 drahtlose Kommunikationssignale empfangen kann.

Gemäß einem Beispiel umfasst der drahtlose Kommunikationspfad 502 nur einen drahtlosen Abschnitt einer lokalen drahtlosen Kommunikationstechnologie wie Bluetooth oder WLAN. Der drahtlose Kommunikationspfad 501 hingegen kann einen sowohl einen Kommunikationspfad per lokaler drahtloser Kommunikationstechnologie und/oder eine Mobilfunkverbindung umfassen.

Ein Kommunikationspfad soll als drahtgebunden verstanden werden, wenn alle Abschnitte des Kommunikationspfads drahtgebunden sind; und ein Kommunikationspfad soll als drahtlos verstanden werden, wenn zumindest ein Abschnitt des Kommunikationspfads drahtlos ist. Dementsprechend kann ein drahtloser Kommunikationspfad neben zumindest einem drahtlosen Abschnitt auch einen oder mehrere drahtgebundene Abschnitte aufweisen.

Unter einem drahtlosen Abschnitt eines Kommunikationspfads soll ein Abschnitt des Kommunikationspfads verstanden werden, in dem die Kommunikation in Form drahtloser Kommunikationssignale gemäß einer drahtlosen Kommunikationstechnologie wie Bluetooth, WLAN, und/oder Mobilfunk erfolgt, wobei nur letztere beide als lokale drahtlose Kommunikationstechnologien verstanden werden sollen. Die Bluetooth-Spezifikationen sind derzeit im Internet unter www.bluetooth.org erhältlich. WLAN ist in den Standards der IEEE 802.11-Familie standardisiert, die derzeit im Internet unter https://www.ieee.org abgerufen werden können. Unter Mobilfunk sollen insbesondere Mobilfunkkommunikationssysteme wie ein 2G/3G/4G/5G/6G-Kommunikationssystem verstanden werden. Die Spezifikationen der 2G, 3G, 4G, 5G oder 6G Mobilfunkkommunikationssysteme werden derzeit durch das 3rd Generation Partnership Project (3GPP) entwickelt und können im Internet unter https://www.3gpp.org/ abgerufen werden.

Unter einem drahtgebundenen Abschnitt eines Kommunikationspfads soll ein Abschnitt des Kommunikationspfads verstanden werden, in dem die Kommunikation in Form drahtgebundener Kommunikationssignale gemäß einer drahtgebundene Kommunikationstechnologie wie Ethernet erfolgt. Ethernet ist zum Beispiel in den Standards der IEEE-802.3-Familie spezifiziert.

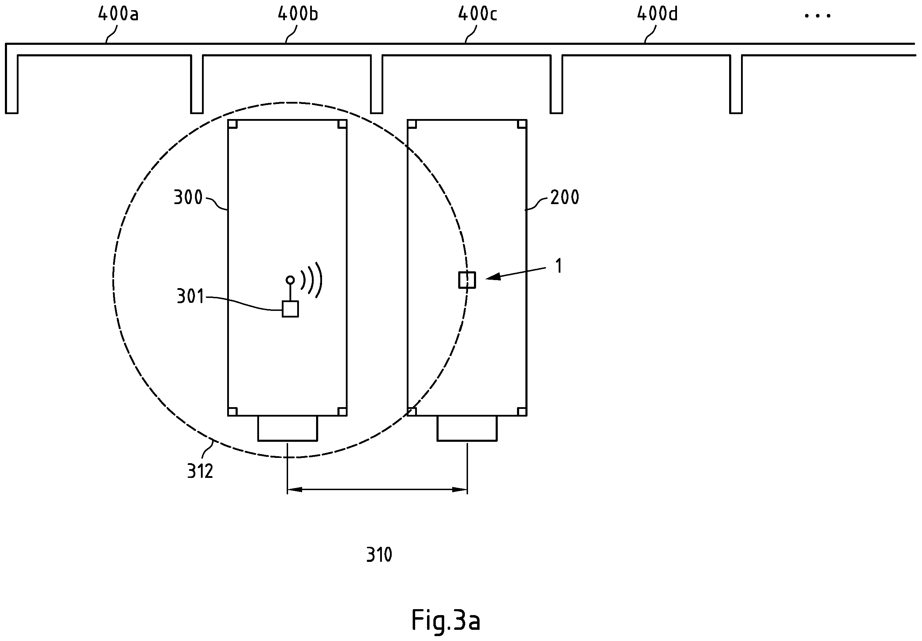

In Fig. 3a sind ein empfangendes Transportfahrzeug 200 sowie ein sendendes Transportfahrzeug 300 dargestellt. Im gezeigten Ausführungsbeispiel sind die beiden Transportfahrzeuge auf benachbarten Stellplätzen 400b, 400c, beispielsweise eines zum Abstellen von Transportfahrzeugen 200, 300 ausgelegten Areals, beispielsweise eines Trailer Yards, abgestellt. Das empfangende Transportfahrzeug 300 übermittelt mit einer Kommunikationsschnittstelle einer Vorrichtung 301 drahtlose Kommunikationssignale. Die drahtlosen Kommunikationssignale werden von dem empfangenden Transportfahrzeug 200, beispielsweise von einer ihm zugehörigen Steuerungsvorrichtung 1, beispielsweise einer Telematikeinheit, insbesondere von deren drahtloser Kommunikationsschnittstelle, empfangen. Basierend auf einer Signalstärke des empfangenen drahtlosen Kommunikationssignals kann eine Distanz 310 zwischen dem sendenden Transportfahrzeug 300, insbesondere dessen Steuerungsvorrichtung 301 und/oder deren drahtloser Kommunikationsvorrichtung, und dem empfangenden Transportfahrzeug 200, insbesondere dessen Vorrichtung 1 und/oder deren drahtloser Kommunikationsvorrichtung 106 bestimmt werden.

Unter Kenntnis der Position des sendenden Transportfahrzeugs 300, insbesondere dessen Vorrichtung 301 oder deren drahtlose Kommunikationsschnittstelle, lässt sich eine Menge 312 von möglichen Standorten des empfangenden Transportfahrzeugs 200 ermitteln. Beispielsweise kann in einer ersten Näherung die Position des empfangenden Transportfahrzeugs 200 als eine Position des sendenden Transportfahrzeugs 300 angenähert werden. Alternativ oder zusätzlich kann beispielsweise die Position des empfangenden Transportfahrzeugs 200 als ein zu einem Stellplatz 400b des sendenden Transportfahrzeugs 300 benachbarter Stellplatz 400a, 400c ermittelt werden, beispielsweise basierend auf einer Topologie eines Areals, auf welchem das sendende Transportfahrzeug 300 und/oder das empfangende Transportfahrzeug 200 angeordnet sind.

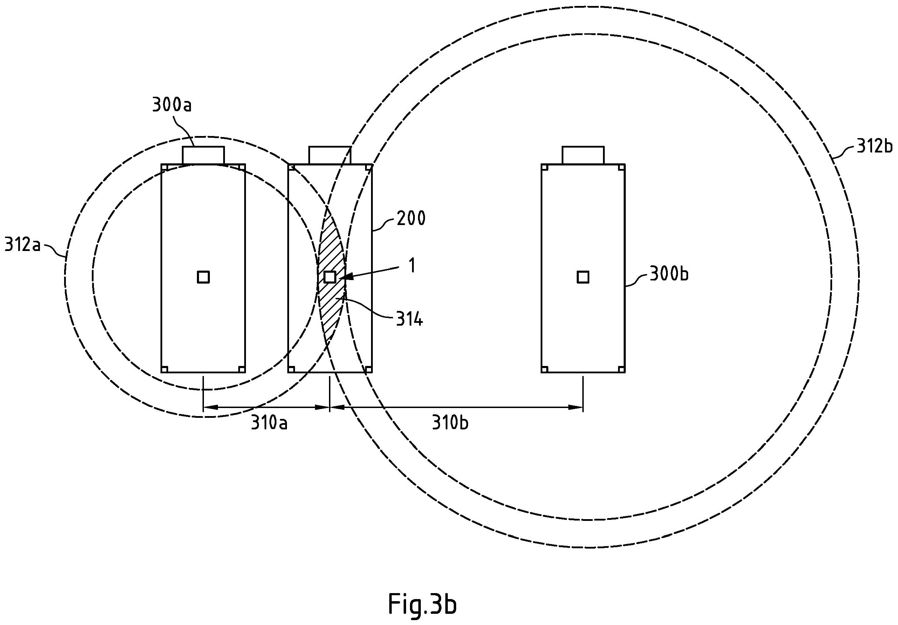

Falls, wie in Fig. 3b gezeigt, drahtlose Kommunikationssignale von zwei unterschiedlichen sendenden Transportfahrzeugen 300a, 300b von dem empfangenden Transportfahrzeug 200 empfangen werden, kann der Standort des empfangenden Transportfahrzeugs 200 hierauf basierend besonders genau bestimmt werden. Gezeigt sind jeweils basierend auf der empfangenen Signalstärke der empfangenen Kommunikationssignale bestimmte Entfernungen 310a, 310b zwischen den jeweiligen sendenden Transportfahrzeugen 300a, 300b und dem empfangenden Transportfahrzeug 200 bestimmt werden. Beispielsweise kann für die jeweilige Distanz 310a, 310b ein geschätzter Wertebereich zwischen einer minimalen und einer maximalen Distanz bestimmt werden. Die sich hieraus ergebenden Mengen von möglichen Standorten des empfangenden Transportfahrzeugs 200 sind jeweils durch Paare aus zwei konzentrischen Kreisen 312a, 312b dargestellt. Werden die Informationen über den Standort des empfangenden Transportfahrzeugs 200 basierend auf den empfangenen Kommunikationssignalen von zwei sendenden Transportfahrzeugen 300a, 300b bestimmt, kann eine reduzierte mögliche Menge 314 von Standorten als ein Überlapp zwischen den zwei Mengen 312a, 312b ermittelt werden. Die skizzierte Vorgehensweise entspricht im Wesentlichen einer Triangulation.

Fig. 4 ist ein Flussdiagramm einer Ausführungsform eines Verfahrens gemäß der Erfindung. Im Folgenden wird beispielhaft davon ausgegangen, dass das Verfahren durch die Vorrichtung 1, die Teil des in Fig. 2 dargestellten Sattelaufliegers 200 ist, ausgeführt wird.

In einem ersten Schritt M100 empfängt die Vorrichtung zumindest ein drahtloses Kommunikationssignal von zumindest einem sendenden Transportfahrzeug. Beispielsweise kann hierfür die drahtlose Kommunikationsschnittstelle 106 verwendet werden. Das drahtlose Kommunikationssignale kann beispielsweise ein WLAN-Signal sein. Beispielsweise können mehrere Kommunikationssignale, beispielsweise zwei, beispielsweise ausgehend von verschiedenen sendenden Transportfahrzeugen empfangen werden. Das Verfahren kann beispielsweise mit dem Schritt M100 beginnen, wenn eine Schwellwertgeschwindigkeit unterschritten wird, das Transportfahrzeug rückwärtsfährt und/oder das Transportfahrzeug zum Stillstand kommt.

In einem zweiten Schritt M102 wird zumindest eine Signalstärke des zumindest einen empfangenen drahtlosen Kommunikationssignals bestimmt, beispielsweise ein RSSI Wert. Die empfangene Signalstärke kann beispielsweise von der drahtlosen Kommunikationsschnittstelle 106 bestimmt werden. Die empfangene Signalstärke kann indikativ für eine Distanz zwischen dem empfangenden Transportfahrzeug und dem sendenden Transportfahrzeug sein.

In einem dritten Schritt M104 wird eine Standortindikation des empfangenden Transportfahrzeugs bestimmt. Beispielsweise kann die Standortindikation die empfangenen Signalstärke, eine daraus abgeleitete Distanz zu dem sendenden Transportfahrzeug oder eine Position oder ein Bereich sein, an und/oder in dem sich das empfangende Transportfahrzeug befindet. Das Bestimmen kann somit verschiedene Verarbeitungsgrade der zumindest einen oder der mehreren empfangenen Signalstärken umfassen. Die Vorrichtung 1, beispielsweise die Telematikeinheit, kann insbesondere den Standort des empfangenden Transportfahrzeugs als Standortindikation bestimmen und/oder auch nur Informationen bestimmen, welche durch weitere Verarbeitungsschritte ein Ableiten des Standorts zulassen wie beispielsweise die empfangenen Signalstärke oder eine Distanz zu dem sendenden Transportfahrzeug.

Die Standortindikation kann ferner in Schritt M106 übermittelt werden, insbesondere an eine weitere Vorrichtung, beispielsweise an ein Transportfahrzeug, zum Beispiel eines des zumindest einen sendenden Transportfahrzeugs, oder alternativ oder zusätzlich an einen Server, beispielsweise Server 5, beispielsweise mittels der Kommunikationsverbindung 502. Beispielsweise kann der Server Teil eines Bewirtschaftungssystems eines Areals sein, auf welchem das empfangende und/oder das zumindest eine sendende Transportfahrzeug befindet, beispielsweise eines Trailer Yards.

Die Schritte M100, M102, M104 und M106 können in der in Fig. 4 dargestellten Reihenfolge oder in einer beliebigen anderen Reihenfolge erfolgen.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Schritte in den einzelnen Flussdiagrammen ist nicht zwingend, alternative Abfolgen der Schritte sind denkbar - soweit nicht anders angegeben. Die Schritte können auf verschiedene Art und Weise implementiert werden, so ist eine Implementierung in Software (durch Programmanweisungen), Hardware oder eine Kombination von beidem zur Implementierung der Schritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren, ausgeführt von einem empfangenden Transportfahrzeug (200), umfassend:
- Empfangen, durch eine drahtlosen Empfangsvorrichtung (106) des empfangenden Transportfahrzeug (200), zumindest eines drahtlosen Kommunikationssignals von zumindest einem sendenden Transportfahrzeug (300);
- Bestimmen zumindest einer Signalstärke des zumindest einen empfangenen drahtlosen Kommunikationssignals;
- Bestimmen, zumindest teilweise basierend auf der zumindest einen bestimmten Signalstärke des zumindest einen empfangenen drahtlosen Kommunikationssignals, einer Standortindikation des empfangenden Transportfahrzeugs (200), wobei die Standortindikation indikativ für einen Standort des empfangenden Transportfahrzeugs (200) ist,
- Übermitteln, mittels einer drahtlosen Sendevorrichtung (106) des empfangenden Transportfahrzeugs (200), der Standortindikation an eine weitere Vorrichtung, wobei die weitere Vorrichtung von dem Transportfahrzeug getrennt ist.

2. Verfahren nach Anspruch 1, wobei
- die drahtlose Empfangsvorrichtung (106) eine WLAN-Empfangsvorrichtung ist,
- das drahtlose Kommunikationssignal (106) ein WLAN-Signal ist und/oder
- die drahtlose Sendevorrichtung (106) eine WLAN-Sendevorrichtung ist.

3. Verfahren nach Anspruch 1 oder 2, wobei
- das drahtlose Kommunikationssignal eine Identifikation des sendenden Transportfahrzeugs (300) umfasst und/oder
- das drahtlose Kommunikationssignal eine Standortindikation des sendenden Transportfahrzeugs (300) umfasst.

4. Verfahren nach einem der Ansprüche 1 bis 3, wobei
- das zumindest eine drahtlose Kommunikationssignal zumindest zwei drahtlose Kommunikationssignale von zumindest zwei voneinander verschiedenen sendenden Transportfahrzeugen (300a, 300b) umfasst.

5. Verfahren nach einem der Ansprüche 1 bis 4, wobei
- die Signalstärke einer Empfangenen Signalstärke Indikation (RSSI), einem Signal-zu-Rauschen-Verhältnis (SNR), einer Signal-zu-Rauschen-plus-Interferenz-Verhältnis (SNIR) und/oder Kombinationen hieraus entspricht.

6. Verfahren nach einem der Ansprüche 1 bis 5, wobei die Standortindikation
- auf zumindest zwei empfangenen drahtlosen Kommunikationssignalen basiert,
- auf zumindest einer Identifikation des zumindest einen sendenden Transportfahrzeugs (300) basiert,
- auf zumindest einer Standortindikation des zumindest einen sendenden Transportfahrzeugs (300) basiert.

7. Verfahren nach einem der Ansprüche 1 bis 6, wobei die Standortindikation umfasst
- zumindest eine empfangene Signalstärke,
- zumindest eine Identifikation des zumindest einen sendenden Transportfahrzeugs (300),
- zumindest eine Standortindikation des zumindest einen sendenden Transportfahrzeugs (300), und/oder
- zumindest eine Abstandsinformation, wobei die Abstandsinformation einen Abstand zwischen dem empfangenden Transportfahrzeug (200) und einem des zumindest einen sendenden Transportfahrzeugs (300) angibt, insbesondere basierend auf der von dem jeweiligen sendenden Transportfahrzeug (300) empfangenen Signalstärke.

8. Verfahren nach einem der Ansprüche 1 bis 7, wobei die Standortindikation umfasst
- eine Standortinformation des empfangenden Transportfahrzeugs (200), insbesondere eine absolute oder relative Standortinformation, insbesondere eine Stellplatz-Identifikation und/oder eine geografische Position.

9. Verfahren nach einem der Ansprüche 1 bis 8, wobei
- das Bestimmen der Standortindikation eine Bestimmung des nächstliegenden sendenden Transportfahrzeugs (300a), eine Triangulation basierend auf zumindest zwei Kommunikationssignalen von zumindest zwei sendenden Transportfahrzeugen (300a, 300b) und/oder die Anwendung eines Simultanen Kartierungs- und Lokalisierungs-Algorithmus (SLAM) umfasst.

10. Verfahren nach einem der Ansprüche 1 bis 9, wobei
- die weitere Vorrichtung ein Transportfahrzeug (300) ist, insbesondere eines des zumindest einen sendenden Transportfahrzeugs (300), und/oder
- die weitere Vorrichtung ein Lager ist, insbesondere ein Lager, mit dem das Transportfahrzeug in Warenaustausch steht.

11. Verfahren nach einem der Ansprüche 1 bis 10, ferner umfassend
- Empfangen, von der weiteren Vorrichtung, einer Rückmeldung, wobei insbesondere die Rückmeldung
- mittels der drahtlosen Empfangsvorrichtung (106) empfangen wird,
- eine Standortinformation umfasst und/oder
- eine Lokalisierungsbestätigung und/oder eine Lokalisierungsfehlerindikation umfasst.

12. Verfahren nach einem der Ansprüche 1 bis 11, wobei
- das empfangende Transportfahrzeug (200) bei Ausführung des Verfahrens stationär ist, insbesondere geparkt, und/oder
- das empfangende Transportfahrzeug (200) das Verfahren nach einem Übergang aus einem fahrenden Betriebsmodus in einen stehenden Betriebsmodus ausführt, insbesondere nach einem Einparken.

13. Computerprogramm umfassend Programmanweisungen, die dazu ausgebildet sind, bei Ausführung durch mindestens einen Prozessor einer Vorrichtung, die Vorrichtung zu veranlassen, das Verfahren nach einem der Ansprüche 1 bis 12 auszuführen.

14. Vorrichtung umfassend Mittel eingerichtet zur Ausführung des Verfahrens nach einem der Ansprüche 1 bis 12.

15. Vorrichtung nach Anspruch 14, wobei die Vorrichtung ein Transportfahrzeug (200) oder ein Teil des Transportfahrzeugs (200) ist, insbesondere ein Nutzfahrzeuggespann umfassend ein Zugfahrzeug und einen Nutzfahrzeuganhänger, oder ein Nutzfahrzeuganhänger, insbesondere ein Sattelauflieger.
